# EUROPEAN PATENT APPLICATION

(11) **EP 3 722 952 A1**
(43) Date of publication of application: **14.10.2020**
(21) Application number: 20161684.4
(22) Date of filing: 08.03.2020
(51) Int. Cl.: G06F 9/50, G06F 12/14, G06F 13/16, G06F 13/00, G06F 21/79

(54) **A CONCEPT FOR ACCESSING COMPUTER MEMORY OF A MEMORY POOL**

(30) Priority: 09.04.2019 US 201916378828
(71) Applicant: INTEL Corporation, Santa Clara, CA 95054 (US)
(72) Inventor: SCHMISSEUR, Mark, Phoenix, 85048 (US); WILLHALM, Thomas, 69207 Sandhausen (DE); GUIM BERNAT, Francesc, Barcelona (ES); KUMAR, Karthik, Chandler, AZ Arizona 85249 (US); PRABHAKARAN, Suraj, 52072 Aachen (DE)
(74) Representative: 2SPL Patentanwälte PartG mbB

(57) **Abstract**

Examples relate to a memory controller or memory controller device for a memory pool of a computer system, to a management apparatus or management device for the computer system, and to an apparatus or device for a compute node of the computer system, and to corresponding methods and computer programs. The memory pool comprises computer memory that is accessible to a plurality of compute nodes of the computer system via the memory controller. The memory controller comprises interface circuitry for communicating with the plurality of compute nodes. The memory controller comprises control circuitry being configured to obtain an access control instruction via the interface circuitry. The access control instruction indicates that access to a portion of the computer memory of the memory pool is to be granted to one or more processes being executed by the plurality of compute nodes of the computer system. The access control instruction comprises information related to a node identifier and a process identifier for each of the one or more processes. The control circuitry is configured to provide access to the portion of the computer memory of the memory pool to the one or more processes based on the access control instruction.

## Description

### Field

Examples relate to a memory controller or memory controller device for a memory pool of a computer system, to a management apparatus or management device for the computer system, and to an apparatus or device for a compute node of the computer system, and to corresponding methods and computer programs.

### Background

A pooling of resources in a rack may be performed in computer systems comprising a plurality of compute nodes. One such resource that has been identified for pooling is memory: a memory pool is made accessible to a set of nodes in a system.

### Brief description of the Figures

Some examples of apparatuses and/or methods will be described in the following by way of example only, and with reference to the accompanying figures, in which
- Fig. 1a: shows a block diagram of a memory controller or of a memory controller device for a memory pool of a computer system, of a memory pool comprising a memory controller or a memory controller device, and of a computer system comprising a memory pool and a plurality of compute nodes;
- Fig. 1b: shows a flow chart of a memory controller method for a memory controller of a memory pool of a computer system;
- Fig. 2a: shows a block diagram of an apparatus or device for a compute node of a computer system;
- Fig. 2b: shows a flow chart of a method for a compute node of a computer system;
- Fig. 3a: shows a block diagram of a management apparatus or of a management device for managing a computer system;
- Fig. 3b: shows a flow chart of a method for managing a computer system;
- Fig. 4: shows a schematic diagram of a high-level view of an example of a computer system; and
- Fig. 5: shows a schematic diagram of a proposed architecture.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

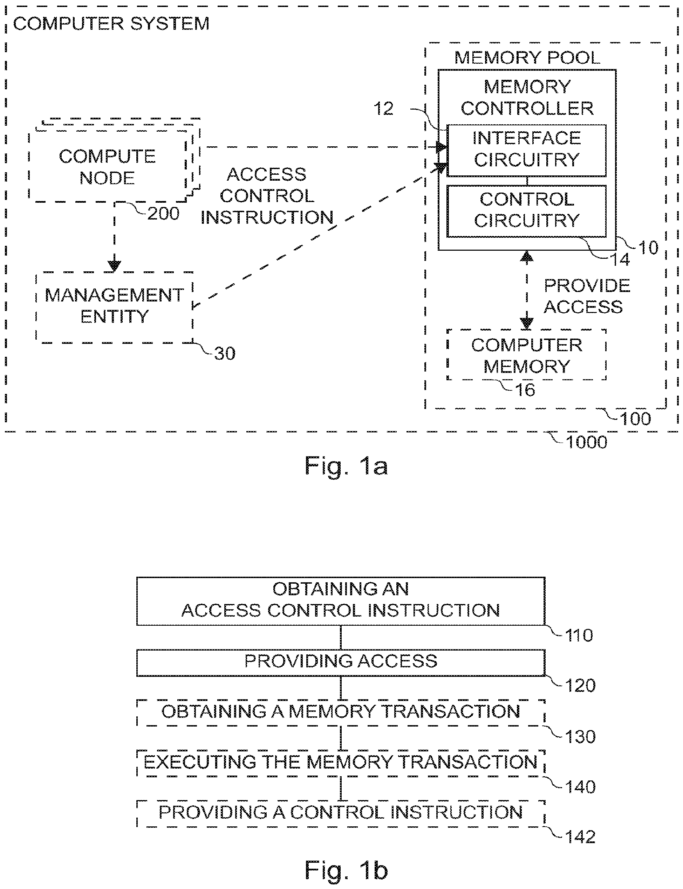

Fig. 1a shows a block diagram of a memory controller 10 or of a memory controller device 10 for a memory pool 100 of a computer system. The components of the memory controller device 10 are defined as component means, which correspond to the respective structural components of the memory controller 10. Fig. 1a further shows the memory pool 100 comprising the memory controller 10 or the memory controller device 10. The memory pool 100 comprises computer memory 16 that is accessible to a plurality of compute nodes 200 of the computer system 1000 via the memory controller or memory controller device 10. Fig. 1a further shows the computer system 1000 comprising the memory pool 100 and a plurality of compute nodes 200. Optionally, the computer system 1000 may comprise a management apparatus 30.

The memory controller 10 comprises interface circuitry 12 (i.e. means for communication 12) for communicating with the plurality of compute nodes 200. The memory controller 10 comprises control circuitry 14 (i.e. means for controlling 14) that is coupled to the interface circuitry 12. The control circuitry 14 is configured to obtain (i.e. receive) an access control instruction via the interface circuitry 12. The access control instruction indicates that access to a portion of the computer memory 16 of the memory pool 100 is to be granted to one or more processes being executed by the plurality of compute nodes 200 of the computer system 1000. The access control instruction comprises information related to a node identifier and a process identifier for each of the one or more processes. The control circuitry 14 is configured to provide (i.e. implement) access to the portion of the computer memory 16 of the memory to the one or more processes based on the access control instruction.

Fig. 1b shows a flow chart of a (corresponding) memory controller method for the memory controller 10 of the memory pool 100 of the computer system 1000. The memory controller method comprises obtaining (i.e. receiving) 110 the access control instruction. The memory controller method comprises providing (i.e. implementing) 120 the access to the portion of the computer memory 16 of the memory to the one or more processes based on the access control instruction. For example, the memory controller method may be executed by the memory pool 100, e.g. by the memory controller 10 of the memory pool 100.

The following description relates both to the memory controller (device) 10 of Fig. 1a and to the memory controller method of Fig. 1b.

At least some examples of the present disclosure relate to a computer system, more specifically to a computer system comprising a memory pool and a plurality of compute nodes. Such computer systems may be denoted rack-scale computer systems, which may comprise a large number of compute nodes, which are often interconnected using switchless interconnects. In other words, the computer system 1000 may be a rack-scale computer system. In such rack-scale computer systems, many resources may be shared among the compute nodes, e.g. memory or storage. As such computer systems may be used to execute a multitude of different applications at once, which may also belong to different owners, access control to the shared resources may be an important consideration in the design of such systems. Examples provide a memory controller 10 for a memory pool 100, which may implement a fine-grained access control for an access of the plurality of compute nodes to the computer memory 16 of the memory pool 100. In other words, the memory controller may act as gatekeeper between the plurality of compute nodes 200 and the computer memory 16, e.g. restricting an access of the plurality of compute nodes to the computer memory 16.

In examples, the memory pool 100 may be a shared memory entity, i.e. an entity that makes the computer memory 16 accessible to the plurality of compute nodes 200. The memory pool 100 comprises the computer memory 16. For example, the computer memory 16 may comprise volatile memory or non-volatile memory. For example, the computer memory 16 may comprise one of random access memory (RAM), dynamic RAM (DRAM), static RAM (SRAM), non-volatile memory or storage, any semiconductor memory, and it may be arranged in any architecture using any technology, e.g. phase change memory (PCM), dynamic random access memory (DRAM), flash memory, or DDR (double data rate memory). In at least some examples, the computer memory 16 comprises persistent memory. The persistent memory may be based on Intel® 3D XPoint™. Intel and 3D XPoint are trademarks of Intel Corporation or its subsidiaries in the U.S. and/or other countries. In some examples, the computer system 1000 may comprise more than one memory pool, with each memory pool comprising a memory controller 10.

The computer system 1000 comprises the plurality of compute nodes 200. For example, the computer system 1000 may comprise a large number of compute nodes, e.g. more than 8 (or more than 16, more than 32, more than 64, more than 128) compute nodes. For example, the compute nodes may be CPU-based (Central Processing Unit-based) or accelerator-based (e.g. Graphics Processing Unit (GPU)-based or Field-Programmable Gate Array (FPGA)-based. In other words, the plurality of compute nodes 200 may comprise at least one of central processing unit-based compute nodes, graphics processing unit-based compute nodes, and field-programmable gate array-based compute nodes. For example, the plurality of compute nodes may comprise compute nodes that are based on a central processing unit, and that comprise one or more graphics processing units and/or one or more field-programmable gate arrays. This may enable a shared usage of computer memory in heterogeneous computer systems comprising both CPU-based and accelerator-based compute nodes.

The computer memory 16 is accessible to the plurality of compute nodes 200 via the memory controller 10. In other words, the memory controller 10 (e.g. the control circuitry) may be configured to provide and/or restrict an access of the plurality of compute nodes to the computer memory, e.g. by handling memory transactions of the plurality of compute nodes 200. For example, the control circuitry 14 may be configured to communicate with the computer memory 16, e.g. via the interface circuitry, in order to provide the access to the computer memory 16.

The control circuitry is configured to obtain the access control instruction via the interface circuitry 12. For example, the access control instruction may be an instruction that specifies an access to be provided for the one or more processes to the portion of the computer memory. In some examples, the access control instruction may specify (all of) the processes of the plurality of compute nodes that are to be granted access to the portion of the 16. Alternatively, more than one access control instruction pertaining to the portion of the computer memory may co-exist, e.g. each access control instruction may specify one or more processes being executed by the plurality of compute nodes that are to be granted access to the portion of the 16, and the more than one access control instruction pertaining to the portion of the computer memory may be used in conjunction to provide the access to the portion of the computer memory.

In at least some examples, the portion of the computer memory 16 is associated with a process or thread being executed by a compute node of the plurality of compute nodes 200. In other words, a process or thread being executed by a compute node of the plurality of compute nodes 200 may "own" the portion of the computer memory 16. For example, the portion of the computer memory 16 may be assigned to or reserved for the process or thread being executed by a compute node of the plurality of compute nodes 200. For example, the portion of the computer memory may correspond to or be accessible via an address range of the computer memory 16. For example, the portion of the computer memory 16 may be a portion of the computer memory 16 that is accessible via an address range of the computer memory 16, and which is assigned to the process or thread being executed by the compute node of the plurality of compute nodes 200. The one or more processes (that access is to be granted to) may be executed by the same compute node or by one or more different compute nodes of the plurality of compute nodes 200. This may enable granting access to the memory pool of processes of different compute nodes of the computer system.

In some examples, the access control instruction may be obtained from the compute node that executes the thread or process the portion of the computer memory 16 is associated with. This may enable a direct control of the access by the node "owning" the portion of the memory. Alternatively, the access control instruction is obtained from the management apparatus 30 of the computer system 1000. This may provide an additional layer of protection, e.g. to avoid using access control instructions being sent by malicious processes of a compute node.

The access control instruction indicates that access to the portion of the computer memory 16 of the memory pool 100 is to be granted to the one or more processes being executed by the plurality of compute nodes 200 of the computer system 1000. In some examples, the access may be granted in an even more fine-granular fashion by specifying threads of a process instead of processes. For example, the access control instruction may indicate that access to a portion of the computer memory 16 of the memory pool 100 is to be granted to one or more threads of the one or more processes, e.g. to a subset of the threads of the process, excluding one or more further threads of the process. For example, the access to the portion of the computer memory 16 may enable the one or more processes (e.g. one or more threads of the one or more processes) to access the portion of the memory, e.g. using a defined level of access. For example, the access control instruction may comprise information related to an access to be granted to the portion of the computer memory 16. The access to be granted may be one of write only access, read only access and read-and-write access. This may enable a fine granularity of the access provided to the processes.

In order to distinguish processes and/or threads being executed by the plurality of compute nodes, the access control instruction may comprise information that is suitable for identifying the one or more processes and/or for identifying the one or more threads of the one or more threads. Consequently, the access control instruction comprises information related to a node identifier and a process identifier for each of the one or more processes. Optionally, if thread-level access is to be granted, the access control instruction may additionally comprise information related to a thread identifier for each of the one or more threads of the one or more processes. For example, the access control instruction may further comprise information related to a thread identifier for each of the one or more threads. This may enable a finer granularity of the access control. Each process identifier may relate to one of a process executed by a central processing unit of a compute node, a process executed by a graphics processing unit of a compute node, and a process executed by a field-programmable gate array of a compute node.

In examples, the node identifier, process identifier, thread identifier and access to be granted may be (coded) binary identifiers. In other word, the node identifier may be a binary identifier suitable for identifying a (single) compute node of the plurality of compute nodes (or a GPU or FPGA hosted by a compute node). The process identifier may be a binary identifier suitable for identifying a (single) process being executed by a compute node of the plurality of compute nodes. The thread identifier may be a binary identifier suitable for identifying a (single) thread of the one or more processes being executed by a compute node of the plurality of compute nodes. The access to be granted may also be specified as a binary identifier, e.g. with a first bit of the binary identifier specifying a read access and a second bit of the binary identifier specifying a write access. In at least some examples, the node identifier, the process identifier, and/or the thread identifier may be concatenated or represented by a single binary identifier. For example, a binary identifier representing a thread of the one or more threads may at the same time indicate the process of the thread and the node executing the process and the thread. A binary identifier representing a process of the one or more threads may at the same time indicate the node executing the process. As an alternative to binary identifiers, the access control instruction may be based on a markup language, and the node identifier, process identifier, thread identifier and access to be granted may be based on a format of the markup language.

The control circuitry 14 is configured to provide access to the portion of the computer memory 16 of the memory to the one or more processes (or to the one or more threads of the one or more processes) based on the access control instruction. To enable this, the control circuitry 14 may be configured to store information on the access control instruction, e.g. the content of the access control instruction, in a memory of the memory controller 10. For example, the control circuitry may be configured to process memory transactions obtained (i.e. received) from the plurality of compute nodes.

For example, the control circuitry 14 may be configured to obtain a memory transaction related to the portion of the computer memory 16. The memory transaction may originate from a process being executed by a compute node of the plurality of compute nodes 200, e.g. the memory transaction may originate from a thread (of the process) being executed by a compute node of the plurality of compute nodes 200. The control circuitry 14 may be configured to execute or decline the memory transaction based on the access control instruction. This may provide the access to the computer memory of the memory pool. For example, the control circuitry may grant access to the portion of the memory if an access to the portion of the memory has been previously granted to the process being executed by a compute node of the plurality of compute nodes 200. In other words, the control circuitry 14 may be configured to execute the memory transaction if the one or more processes comprise the process that the memory transaction originates from. If thread-grain access is desired, the control circuitry 14 may be configured to execute the memory transaction if the one or more threads of the one or more processes comprise the thread that the memory transaction originates from. This enables that access is (only) granted to the processes and/or threads that are specified by the access control instruction.

In at least some examples, the access to the portion of the memory may (only) be granted, if the access that is desired in the memory transaction matches the access granted through the access control instruction. In other words, the access control instruction may comprise information related to an access to be granted to the portion of the computer memory 16. The control circuitry 14 may be configured to execute the memory transaction if the one or more processes comprise the process that the memory transaction originates from (or if the one or more threads of the one or more processes comprise the thread that the memory transaction originates from) and if the memory transaction matches the access to be granted. This may enable a differentiating between different levels of access (e.g. read only/write only/read-and-write).

In case any of the prerequisites (e.g. node identifier, process identifier, thread identifier, access to be granted) do not match the access control instruction, the access to the portion of the memory may be declined. In this case, the respective compute node may be notified. In other words, the control circuitry 14 may be configured to provide a control instruction indicating an access error to the compute node the memory transaction originates from if the memory transaction is declined. This may enable a generation of a (software) interrupt at the compute nodes 200. For example, the control instruction indicating the access error may be provided to the compute node to cause the compute node to generate a (software) interrupt. In some examples, the control instruction may also be provided to the management apparatus 30, e.g. to enable a monitoring of access violations.

In various examples, the granted access may be revoked at a later time, either partially or completely. The control circuitry 14 may be configured to revoke the access to the portion of the computer memory 16 for the one or more processes based on a further access control instruction. In other words, the control circuitry 14 may be configured to obtain (i.e. receive) the further access control instruction, e.g. from the compute node the access control instruction is received from the management apparatus 30. The further access control instruction may indicate that the access to a portion of the computer memory 16 of the memory pool 100 is to be revoked for the one or more processes (or the one or more threads of the one or more processes), e.g. for a subset of the one or more threads or one or more processes, or for all of the one or more threads or one or more processes. This may disable the access to the computer memory.

The interface circuitry or means for communicating 12 may correspond to one or more inputs and/or outputs for receiving and/or transmitting information, which may be in digital (bit) values according to a specified code, within a module, between modules or between modules of different entities. For example, the means for communicating 12 may comprise interface circuitry configured to receive and/or transmit information. In at least some examples, the interface circuitry is configured to communicate with the computer memory 16. Alternatively, the computer memory is (directly) connected to the control circuitry 14. For example, the interface circuitry or means for communicating 12 may be configured to communicate via a network, e.g. a switchless network fabric, with the plurality of compute nodes 200 and/or with the management apparatus 30 of the computer system 1000.

In examples, the control circuitry 14 or means for controlling 14 may be implemented using one or more processing units, one or more processing devices, any means for processing, such as a processor, a computer or a programmable hardware component being operable with accordingly adapted software. In other words, the described function of the control circuitry 14 or means for controlling 14 may as well be implemented in software, which is then executed on one or more programmable hardware components. Such hardware components may comprise a general purpose processor, a Digital Signal Processor (DSP), a micro-controller, etc.

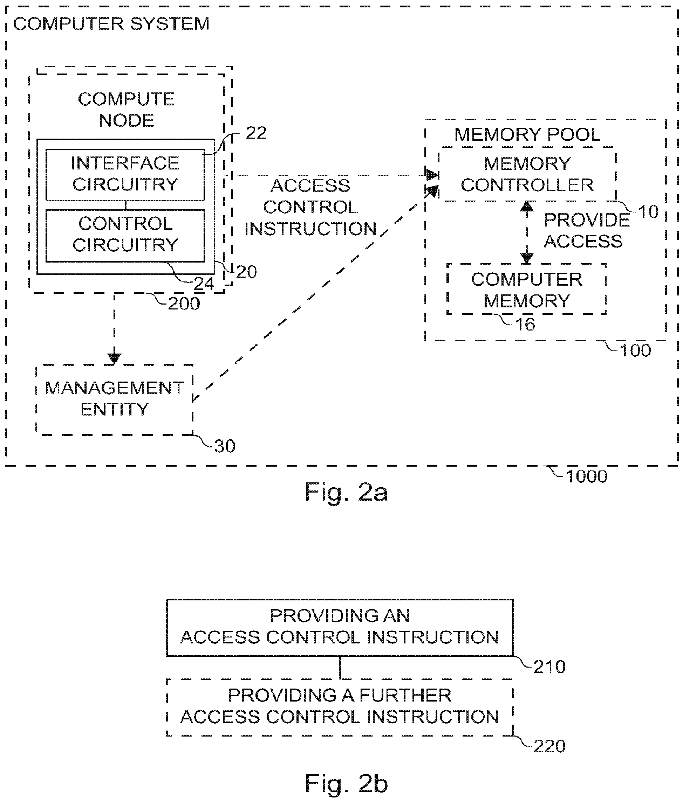

More details and aspects of the memory controller, memory controller device or memory controller method are mentioned in connection with the proposed concept or one or more examples described above or below (e.g. Fig. 2a to 5). The memory controller, memory controller device or memory controller method may comprise one or more additional optional features corresponding to one or more aspects of the proposed concept or one or more examples described above or below.

Fig. 2a shows a block diagram of an apparatus 20 or device 20 for a compute node 200 of a computer system 1000. The components of the device 20 are defined as component means, which correspond to the respective structural components of the apparatus 20. The computer system 1000 comprises a plurality of compute nodes 200 and a memory pool 100. The memory pool 100 comprises computer memory 16 that is accessible to the plurality of compute nodes 200 via a memory controller 10 of the memory pool 100. The apparatus 20 comprises interface circuitry 22 (i.e. communication means 22) for communicating with the memory pool 100. The apparatus 20 comprises control circuitry 24 (i.e. means for controlling 24) that is coupled to the interface circuitry 22.

The control circuitry 24 is configured to provide (i.e. transmit) an access control instruction of a process being executed by the compute node to the memory controller 10 of the memory pool 100 via the interface circuitry 22. The access control instruction indicates that access to a portion of the computer memory 16 of the memory pool 100 that is allocated to the process is to be granted to one or more processes being executed by the plurality of compute nodes 200 of the computer system 1000. The access control instruction comprises information related to a node identifier and a process identifier for each of the one or more processes. For example, the plurality of compute nodes 200 introduced in connection with Fig. 1c may each comprise said apparatus 20.

In at least some examples, the access to the computer memory 16 may be granted with a thread-grain granularity. For example, the access control instruction may indicate that access to a portion of the computer memory 16 of the memory pool 100 is to be granted to one or more threads of the one or more processes. Consequently, the access control instruction may further comprise information related to a thread identifier for each of the one or more threads.

Fig. 2b shows a flow chart of a (corresponding) method for the compute node 200 of the computer system 1000. The method comprises providing 210 the access control instruction of the process being executed by the compute node to the memory controller 10 of the memory pool 100 via the communication means 22.

The following description relates both to the apparatus 20 or device 20 of Fig. 2a and to the method of Fig. 2b.

The apparatus, device or method of Figs. 2a or 2b may be implemented by or may be part of a compute node of the plurality of compute nodes. They may provide the functionality that is required to use the portion of the computer memory 16 with more than a single node or process. For example, the apparatus, device or method of Figs. 2a or 2b may be implemented by an operating system of a compute node of the plurality of compute nodes, e.g. by automatically handling access to the computer memory 16 of the memory pool in case that memory is to be shared with other processes or threads. Alternatively, the apparatus, device or method may provide an (operating system-independent) application programming interface for granting access to the portion of the memory.

The control circuitry 24 is configured to provide the access control instruction of a process being executed by the compute node to the memory controller 10 of the memory pool 100 via the interface circuitry 22. For example, access control instruction may be provided directly to the memory controller 10 of the memory pool 100, i.e. the access control instruction may be generated by the control circuitry 24 and provided (i.e. transmitted) to the memory controller 10. The control circuitry 24 may be configured to generate the access control instruction, e.g. upon request of a process or of a thread that is associated with the portion of the computer memory 16. Alternatively, the access control instruction is provided as a request for providing the access control instruction to a management apparatus 30 for managing the computer system 1000, to cause the management apparatus to provide the access control instruction to the memory of the memory pool 100. In this case, the access control instruction may be generated by the management apparatus 30, and the information the access control instruction is based on (i.e. the parameters of the access control instruction) may be provided to the management apparatus 30. Alternatively, the access control instruction may be provided (i.e. transmitted) to the management apparatus 30 and forwarded to the memory controller 10 (e.g. as an additional security measure). In this case, the memory controller might only accept access control instructions from the management apparatus 30.

In some examples, the access to the portion of the memory might not be granted indefinitely, but might be revoked at some point. This may be caused by a further access control instruction. In other words, the control circuitry may be configured to provide a further access control instruction to the memory controller 10. The method may comprise providing 220 a further access control instruction to the memory controller 10 (e.g. directly or as a request to the management apparatus 30). The further access control instruction may indicate that the access to a portion of the computer memory 16 of the memory pool 100 is to be revoked for the one or more processes (or the one or more threads of the one or more processes). The control circuitry 24 may be configured to generate the further access control instruction, e.g. upon request of a process or of a thread that is associated with the portion of the computer memory 16.

In some examples, the apparatus, device and or method may be used to access the portion of the computer memory 16. In other words, the control circuitry 24 may be configured to provide access to the portion of the computer memory 16 for at least a subset of the one or more processes (or of the one or more threads of the one or more processes) that are executed by the compute node 16. In case the access to the portion of the memory is used by a thread or process that has not been granted access, or in case the access to the portion of the memory exceeds an access granted to said thread or process, the apparatus, device and or method may obtain (i.e. receive) a control instruction from the memory controller 10. The control instruction may indicate an access error, i.e. that the access to the portion of the computer memory has been declined. The control circuitry 24 may be configured to generate (i.e. raise) a (software) interrupt based on the obtained control instruction, e.g. to notify the process or thread that has tried to access the portion of the computer memory. For example, when accessing the portion of the memory, the one or more processes (or the one or more threads of the one or more processes) may include their node identifier, process identifier (and optionally their thread identifier).

The interface circuitry or means for communicating 22 may correspond to one or more inputs and/or outputs for receiving and/or transmitting information, which may be in digital (bit) values according to a specified code, within a module, between modules or between modules of different entities. For example, the means for communicating 22 may comprise interface circuitry configured to receive and/or transmit information. For example, the interface circuitry or means for communicating 22 may be configured to communicate via a network, e.g. a switchless network fabric, with the memory controller 10 of the memory pool 100 and/or with a management apparatus 30 of the computer system 1000.

In examples, the control circuitry 24 or means for controlling 24 may be implemented using one or more processing units, one or more processing devices, any means for processing, such as a processor, a computer or a programmable hardware component being operable with accordingly adapted software. In other words, the described function of the control circuitry 24 or means for controlling may as well be implemented in software, which is then executed on one or more programmable hardware components. Such hardware components may comprise a general purpose processor, a Digital Signal Processor (DSP), a micro-controller, etc.

Examples further provide a further apparatus and method for a compute node of the plurality of compute nodes. The apparatus is configured to providing an access to the portion of the memory to a thread or process being executed by the compute node by including the node identifier of the compute node, the process identifier of the process (and the thread identifier of the thread of the process) in a memory transaction that is transmitted to the memory controller 10 of the memory pool 100. In other words, the method may comprise providing an access to the portion of the memory to a thread or process being executed by the compute node by including the node identifier of the compute node, the process identifier of the process (and the thread identifier of the thread of the process) in a memory transaction that is transmitted to the memory controller 10 of the memory pool 100. For example, the further apparatus may comprise interface circuitry and control circuitry, which may be implemented similar to the interface circuitry and control circuitry of the apparatus 20.

More details and aspects of the apparatus 20, device 20 or method are mentioned in connection with the proposed concept or one or more examples described above or below (e.g. Fig. 2a to 5). The apparatus 20, device 20 or method may comprise one or more additional optional features corresponding to one or more aspects of the proposed concept or one or more examples described above or below.

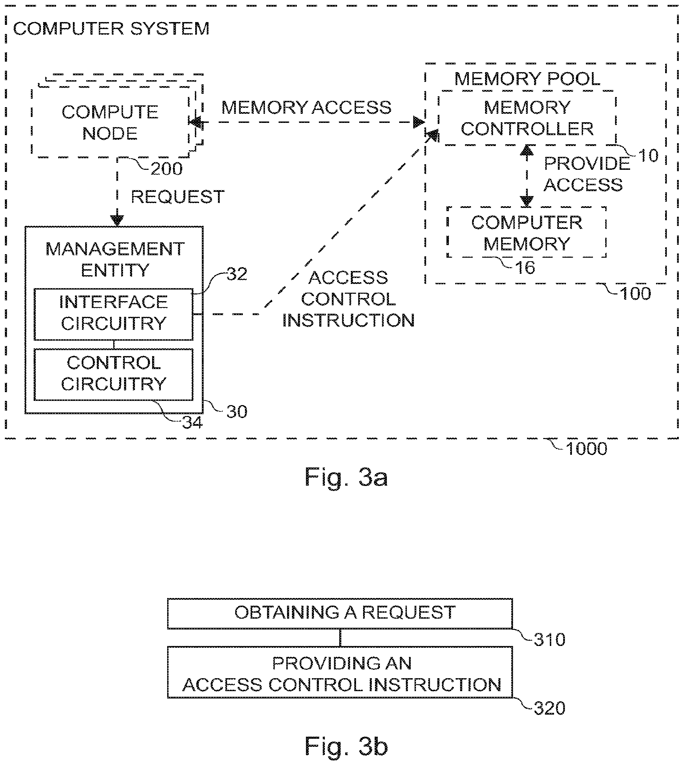

Fig. 3a shows a block diagram of a management apparatus 30 or of a management device 30 for managing a computer system. The components of the management device 30 are defined as component means, which correspond to the respective structural components of the management apparatus 30. The computer system 1000 comprises a plurality of compute nodes 200 and a memory pool 100. The memory pool 100 comprises computer memory 16 that is accessible to the plurality of compute nodes 200 via a memory controller 10 of the memory pool 100. The management apparatus 30 comprises interface circuitry 32 (i.e. communication means 32) for communicating with the plurality of compute nodes 200 and with the memory controller 10 of the memory pool 100. The management apparatus 30 comprises control circuitry 34 (e.g. means for controlling 34) that is coupled to the interface circuitry 32.

The control circuitry 34 is configured to obtain a request for providing an access control instruction from a process being executed by a compute node of the plurality of compute nodes 200 via the interface circuitry 32. The request indicates that access to a portion of the computer memory 16 of the memory pool 100 that is allocated to the process (i.e. to a thread of the process) is to be granted to one or more processes being executed by the plurality of compute nodes 200 of the computer system 1000. In some examples, the access control instruction may be used to provide a thread-grain access to the portion of the computer memory. In this case, the request indicates that access to a portion of the computer memory 16 of the memory pool 100 is to be granted to one or more threads of the one or more processes. The control circuitry 34 is configured to provide the access control instruction to the memory controller 10 of the memory pool 100 via the interface circuitry 32

Fig. 3b shows a flow chart of a (corresponding) management method for managing the computer system 1000. The management method comprises obtaining 310 the request for providing the access control instruction from the process being executed by a compute node of the plurality of compute nodes 200. The management method comprises providing 320 the access control instruction to the memory controller of the memory pool 100. For example, the method may be executed by the management apparatus 30 or management device 30.

The following description relates to both the management apparatus 30 or management device 30 of Fig. 3a, and the corresponding management method of Fig. 3b.

The management apparatus, management device or management method of Figs. 3a or 3b may be implemented by an entity that is separate from both the plurality of compute nodes and the memory pool. They may provide functionality to control the provision of the access control instructions, e.g. by acting as a gatekeeper between the plurality of compute nodes and the memory controller (concerning the provision of the access control instruction). In other words, the management apparatus 30 or management device 30 may be configured to check, whether the access control instruction is valid (e.g. obtained from the node executing the process of thread that is associated with the portion of the computer memory), and to provide the access control instruction to the memory controller 10 (only) if the access control instruction is valid. For example, the management apparatus may be a POD (a physical collection of multiple racks) Manager of the computer system 1000.

The control circuitry 34 is configured to obtain the request for providing an access control instruction from the process being executed by a compute node of the plurality of compute nodes 200 via the interface circuitry 32. In some examples, the request may comprise the access control instruction, e.g. if the access control instruction is generated by the compute node of the plurality of compute nodes. In this case, the control circuitry 34 may be configured to validate the access control instruction, e.g. by ascertaining that the access control instruction is obtained from a thread that is associated with the portion of the computer memory (or with a process that is associated with the portion of the computer memory, or from a node that executes the thread or process that is associated with the portion of the computer memory, and to forward the access control instruction to the memory controller 10 if the access control instruction is valid. Alternatively, the access control instruction may be generated by the control circuitry 34, and the request may comprise the parameters of the access control instruction. The processing circuitry 34 may be further configured to validate the request and the parameters of the access control instruction, e.g. similar to the validation of the access control instruction.

The control circuitry 34 is configured to provide (i.e. transmit) the access control instruction to the memory controller 10 of the memory pool 100, e.g. by forwarding the obtained access control instruction, or by providing the access control instruction that is generated based on the request.

In some examples, the access to the portion of the memory might not be granted indefinitely, but might be revoked at some point. This may be caused by a further access control instruction. In other words, the control circuitry may be configured to provide a further access control instruction to the memory controller 10 based on a further request from the compute node. The further access control instruction may indicate that the access to a portion of the computer memory 16 of the memory pool 100 is to be revoked for the one or more processes (or the one or more threads of the one or more processes). The control circuitry 34 may be configured to generate the further access control instruction, e.g. based on the further request. Alternatively, the control circuitry 34 may be configured to obtain the further access control instruction, to optionally validate the further access control instruction, and to forward the further access control instruction to the memory controller 10 (e.g. if the further access control instruction is valid).

The interface circuitry or means for communicating 32 may correspond to one or more inputs and/or outputs for receiving and/or transmitting information, which may be in digital (bit) values according to a specified code, within a module, between modules or between modules of different entities. For example, the means for communicating 32 may comprise interface circuitry configured to receive and/or transmit information.

In examples, the control circuitry 34 or means for controlling 34 may be implemented using one or more processing units, one or more processing devices, any means for processing, such as a processor, a computer or a programmable hardware component being operable with accordingly adapted software. In other words, the described function of the control circuitry 34 or means for controlling may as well be implemented in software, which is then executed on one or more programmable hardware components. Such hardware components may comprise a general purpose processor, a Digital Signal Processor (DSP), a micro-controller, etc.

At least some examples relate to a thread grain data access controlled for pooled memories.

A pooling of resources in a rack may be performed in computer systems comprising a plurality of compute nodes. One such resource that has been identified for pooling is memory: a memory pool (e.g. the memory pool 100) is made accessible to a set of nodes (e.g. the plurality of compute nodes) in a system. Pooled memory may include the capability of define a subset of nodes that can access pooled memory. In some systems, access control for regions within the pool may be granted at the node level: for example, region X in the pool may be accessed only by nodes 3, 4, and 5 in the rack. In other words, only node-granular access to pooled memory may be supported in some systems. Node granular access prevents application SW from process-granular and thread-granular access controls: this can result in the potential for malicious processes within a node to potentially exploit the system, it may defeat the discipline being enforced for application memory accesses to prevent memory leaks with thread-granular protection-keys at the node level, and may prevent a capability for software-enforced locking etc.

As the number of cores per socket are increased, there is an increasing class of applications that run as multiple processes, with each process being multi-threaded. With increased emphasis on security in the memory subsystem, it may be useful to be able to arbitrate access control at a finer level of granularity. This may lead to a design of applications with such disciplined access controls in place:
At the process level, in some systems, in a single node, page table mechanisms provide process-granular accesses to a region of memory. If a process tries to access memory beyond "what it is allowed" in the pool, the CPU may detect this by comparing the virtual address to the bounds register and base register, and produces a bounds violation, resulting in a trap to the operating system. Access controls may be changed by processes today. This may be done in a single node via page table updates, and TLB (Translation Lookaside Buffer) updates/shoot-downs to all the cores within the node. This might not be possible in pooled systems, however, with compute being a pooled resource that can include processors, FPGAs, accelerators, non-x86 cores, etc.

At the thread level, in a single node, protection key mechanisms may provide thread-granular accesses to pages. With high emphasis on security, several application processes may allow some threads to read and write to regions, and some threads to only read regions, and some threads to access only certain regions, etc. For example, a statistics-collection thread that is collecting information for the database has no need to modify the data in a database or garbage collection thread need only access the heap region in a Java process, etc - in summary, threads often have limited scope in the need to access regions within the process they are part of. This may also be used to leverage software-enforced fine-grained "lock-like" mechanisms, where for example, a producer thread can give a consumer thread (both within the process) in the system read-only access to a region. Unfortunately, in pooled systems, thread-granular access to pooled regions might not be arbitrated.

Examples of the present disclosure may include the above two capabilities in pooled memory systems, to prevent accidental or malicious memory leaks due to failed access controls.

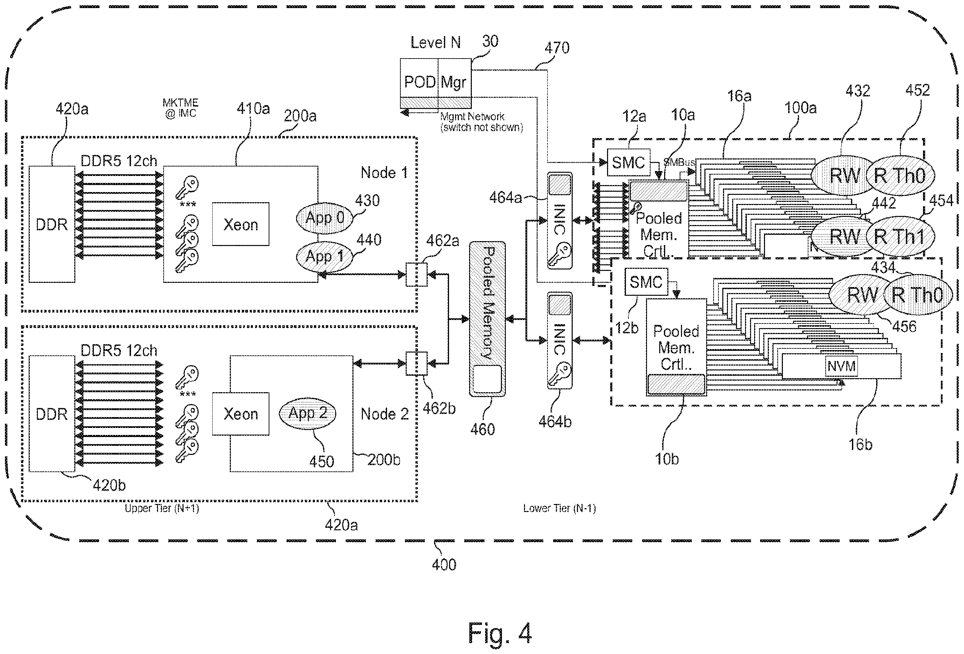

As depicted in Fig. 4, the architecture of at least some examples proposes to expose new interfaces to the software stack (either system or user) running in a compute sled (e.g. the computer system 1000) to specify what other applications and threads (represented by a PASID (Process Address System ID (identifier) + Thread ID (thread identifier)) running in other nodes connected in to the memory pool can access to a particular memory region. For example, the PASID may comprise the node identifier and the process identifier, and the Thread ID may correspond to the thread identifier. Furthermore, the applications can specify what type of access are granted (e.g. the access to be granted) to the PASID + Thread: R, W or RW (Read only, Write only, or Read-and-Write).

In the case that a particular Thread for a particular PASID access in a memory region where it has not the proper rights (i.e: write to a Read Only region or to a region with no permission), the memory access may be rejected and the software stack may be notified via software interrupt that an exception has happened. Similarly, the system software stack and the POD (a physical collection of multiple racks) Manager (e.g. the management apparatus or device) may be notified.

Fig. 4 shows a schematic diagram of a high-level view of an example of a computer system 4000 (which may correspond to the computer system 1000). The computer system comprises at least two compute nodes 200a; 200b and at least two memory pools 100a; 100b. Each compute node 200a; 200b comprises a computation platform 410a; 410b comprising a processor (for example, but not limited to, an Intel Xeon processor), and local memory 420a; 420b (which may be coupled to the computation platform 410a; 410b via a Double Data Rate 5 memory infrastructure). Compute node 200a executes Applications (i.e. processes) AppO 430 and App1 440, and compute node 200b executes application App2 450. The compute nodes are coupled to the pooled memory of the computer system via interfaces 462a; 462b, a pooled memory interconnect infrastructure 460, and two network interface cards 464a; 464b, which connect the two memory pools 100a; 100b to the pooled memory interconnect infrastructure 460. The memory pools 100a; 100b each comprise a pooled memory controller 10a (e.g. the memory controller 10) and a system management controller 12a; 12b for communicating with a POD manager (e.g. the management apparatus) 30 of the computer system 4000 via a management network 470. The memory pools 100a; 100b further comprise computer memory 16a; 16b (e.g. the computer memory 16). Computer memory 16a of memory pool 100a comprises a first portion, with read-and-write access to the first portion being granted 432 to application AppO 430 and read access being granted 452 to Thread0 of App2 450. Computer memory 16a of memory pool 100a comprises a second portion, with read-and-write access to the second portion being granted 442 to application App1 440 and read access being granted 454 to Thread1 of App2 450. Computer memory 16b of memory pool 100b comprises a third portion, with read-and-write access to the third portion being granted 456 to application App2 450 and read-and-write access being granted 434 to Thread0 of AppO 430.

Below, some exemplary situations are shown. In a first example, Thread 0 of AppO accesses a memory region allocated 456 to App2 450 (the third portion of computer memory 16b). Here no rejections or exceptions may be raised given AppO thread has read and write access 434 to that particular region. In a second example, Thread 0 and 1 of App2 450 access memory regions 452; 454 allocated 432; 442 to AppO 430 and App1 440 respectively. The pooled memory may generate an exception if the thread tries to write to any of the two regions. In a third example, if any thread of App1 440 tries to access memory allocated to AppO 430 or App2 450 a rejection may occur and an exception may be raised.

The proposed scheme may be used for managing how pooled memory schemes are actually being utilized by a multi-tenant and multi-threaded environment where scale out instances are sharing data. The provided scheme may be used for at least two fundamental usages: (1) allow to detect bugs or malfunction of software; (2) allow protection to potential attacks that some of the nodes are performing to other. In some architectures, pooled memory may have no control on how threads and applications of a particular node have access to memory. Consequently, examples of the present disclosure may be used to provide such protection. Consequently, pooled schemes may provide schemes for different levels of protection, to allow scale-out cooperative solutions, which may be one of the aims of pooled resources.

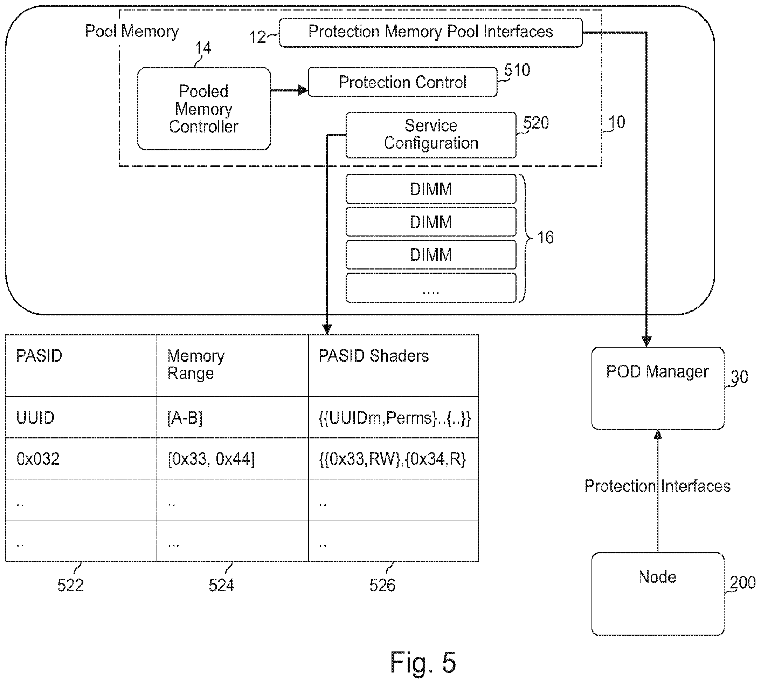

Fig. 5 shows a schematic diagram of the proposed architecture. Fig. 5 may provide a description of the main elements that compose the proposed architecture. Fig. 5 shows a computer system comprising a node 200 (of a plurality of nodes 200), a POD manager 30, and a memory pool 100. The memory pool 100 comprises a memory controller 10, the memory controller 10 comprising protection memory pool interfaces 12 and a pooled memory controller 14 that provides a protection control 510 and that uses a service configuration 520. The memory pool 100 further comprises computer memory 16, which is provided via Dual Inline Memory Modules (DIMMs). In some examples, the service configuration 520 comprises three columns, a first column 522 comprising a PASID of a process, a second column 524 comprising a reference to a memory range, and a third column comprising information to "PASID sharers", i.e. information related to an access to the memory range that is granted to other PASIDs. The PASID may be specified as UUID (Universally Unique Identifier, e.g. node identifier + process identifier of a process), the reference to the memory range may be specified in the format [A-B], with A denoting the start and B denoting the end of the memory range, and the "PASID sharers" may be specified in the format {{UUID, Permissions}... {}}, i.e. a tuple of the UUID representing the PASID of the process that the access to the memory range is granted to, and the access that is granted to the PASID (read only, write only, or read-and-write). For example, as shown in the second content row of the service configuration, the process with the UUID 0x32 is associated (i.e. "owns") the memory range [0x33-0x44], and read-and-write access is granted to the process with the PASID 0x33, and read access is granted to the process with the PASID 0x34).

The POD manager 30 may comprise (e.g. be extended with) a (new) interface that allow a particular Application (represented by a PASID) running in a particular Compute Sled to request to grant to a particular memory range (allocated to that application):
- Be accessed by another application, represented with a PASID, running in another compute Sled
- In a particular mode R, RW or W.

The POD manager may be further extended with a new interface that allows removing the previous grant.

The memory pool 100 may comprise (e.g. be extended with) the following elements (which may be implemented by the memory controller 10):
- (New) interfaces that allow to the POD manager to forward the requests that Nodes provide. Note that the POD manager may check (e.g. by validating the request) that the particular requestor has access to the particular memory and may performs further checks.
- (New) logic that is responsible for managing and configuring a table (e.g. the service configuration 520) that stores how different memory ranges (allocated to particular nodes) can be accessed by other Sharers (nodes + PASID + Thread ID), and with which permissions.
- (New) logic that is responsible for checking that (all) the access performed by a particular Thread Id of an Application represented via PASID running in a particular Node has the right access. In case that the access is not valid, this logic may respond with a rejection and:
   - The pooled memory may notify an exception to the POD Manager.
   - The compute sled, upon receiving the rejection may generate a software interrupt to the application and thread generating the not allowed access.

The concepts of at least some examples may be used in conjunction with memory protection keys (MPK), e.g. based on Multi-Key Total Memory Encryption (MKTME). MKTME may be used for protecting memory between different VMs (Virtual Machines) running on the same system (i.e. compute node) and between VMs and VMMs (Virtual Machine Managers). Compared to the use of MPKs alone, example may provide more functionality. For example, in an example, different threads [Thread 0 Application X, Thread 1 and Thread 2 Application Y] from different platforms share a memory range of the pooled memory ([A,B]) and the owner of applications X and Y might want to enable an access to the pooled memory [A,B] for both applications. However, additionally, the owner may want to specify that
1) Thread 0 App X can read and write to [A,B]
2) Thread 0 App Y can only read to [A,B] and a write should be considered as an bug, application error or potential attack.
3) Thread 1 App Y can only write to [A,B] and read should be as well considered a bug, application error or potential attack.

Examples of the present disclosure may provide such fine-grained access. Consequently, examples may be used in parallel to a MKTME extended solution for pooled memory. This may provide a more robust architecture for application and system developers.

Examples may also be used with non-IA (Itanium Architecture) execution engines like GPUs and FPGAs. To access the pooled memory, the node id (identifier), process id and (optionally) thread id may be provided as part of the request arriving at the pooled memory controller (e.g. the memory controller 10). In case of accelerators, instead of supplying a node ID, process ID, and (optionally) thread id of a thread or process being executed by a CPU, a node ID, process accelerator ID (which may also be denoted process ID), accelerated function ID (which may also be denoted thread ID) may be supplied, where Node Id is optional or generic in case of a pooled accelerator. In case a pooled accelerator is used, the node id may represent the fact that a pooled accelerator is used, or may reference a pool of accelerators. Consequently, two different granularities may be used depending on whether access is to be granted to a process or thread being executed by a CPU, or to function or process accelerator of a node. In this case, the process accelerator id may be used as process ID, and the function ID may be used as thread ID.

Furthermore, the proposed scheme may be implemented in parallel to OS/VMM isolation mechanisms. As mentioned before, examples may provide mechanisms to improve how actual multiple platforms and threads sharing different areas of pooled memory can have a higher control on how the different memory regions are accessed and modified. The control may be used to prevent bugs or to prevent some threads sharing address space modify some critical regions (which can be performed in form of attack). An example of this is a scale-out database (e.g. HANA by SAP) having it distributed in multiple nodes.

When a violation is identified, the pooled memory controller may generate a message back to the platform, which may be translated inside the IAL Agent on die into a software interrupt targeting the Operating System or the Software stack. Using examples, both use cases may send a signal (e.g. the control instruction) back to the software stack, including who, where and when the violation happened. Subsequently, the software stack may take the corresponding action.
Example 1 relates to a memory controller for a memory pool of a computer system, the memory pool comprising computer memory that is accessible to a plurality of compute nodes of the computer system via the memory controller. The memory controller comprises interface circuitry for communicating with the plurality of compute nodes. The memory controller comprises control circuitry being configured to obtain an access control instruction via the interface circuitry. The access control instruction indicates that access to a portion of the computer memory of the memory pool is to be granted to one or more processes being executed by the plurality of compute nodes of the computer system. The access control instruction comprises information related to a node identifier and a process identifier for each of the one or more processes. The control circuitry is configured to provide access to the portion of the computer memory of the memory pool to the one or more processes based on the access control instruction.
In Example 2, the subject matter of example 1 or any of the Examples described herein may further include, that the control circuitry is configured to obtain a memory transaction related to the portion of the computer memory, the memory transaction originating from a process being executed by a compute node of the plurality of compute nodes, and to execute or decline the memory transaction based on the access control instruction.
In Example 3, the subject matter of example 2 or any of the Examples described herein may further include, that the control circuitry is configured to execute the memory transaction if the one or more processes comprise the process that the memory transaction originates from.
In Example 4, the subject matter of example 2 or any of the Examples described herein may further include, that the access control instruction comprises information related to an access to be granted to the portion of the computer memory, wherein the control circuitry is configured to execute the memory transaction if the one or more processes comprise the process that the memory transaction originates from and if the memory transaction matches the access to be granted.
In Example 5, the subject matter of one of the examples 2 to 4 or any of the Examples described herein may further include, that the control circuitry is configured to provide a control instruction indicating an access error to the compute node the memory transaction originates from if the memory transaction is declined.
In Example 6, the subject matter of one of the examples 1 to 5 or any of the Examples described herein may further include, that the access control instruction indicates that access to a portion of the computer memory of the memory pool is to be granted to one or more threads of the one or more processes, the access control instruction further comprising information related to a thread identifier for each of the one or more threads.
In Example 7, the subject matter of example 6 or any of the Examples described herein may further include, that the control circuitry is configured to obtain a memory transaction related to the portion of the computer memory, the memory transaction originating from a thread being executed by a compute node of the plurality of compute nodes, and to execute or decline the memory transaction based on the access control instruction.
In Example 8, the subject matter of example 7 or any of the Examples described herein may further include, that the control circuitry is configured to execute the memory transaction if the one or more threads of the one or more processes comprise the thread that the memory transaction originates from.
In Example 9, the subject matter of example 7 or any of the Examples described herein may further include, that the access control instruction comprises information related to an access to be granted to the portion of the computer memory, wherein the control circuitry is configured to execute the memory transaction if the one or more threads of the one or more processes comprise the thread that the memory transaction originates from and if the memory transaction matches the access to be granted.
In Example 10, the subject matter of one of the examples 1 to 9 or any of the Examples described herein may further include, that the portion of the computer memory is associated with a process or thread being executed by a compute node of the plurality of compute nodes, wherein the one or more processes are executed by the same compute node or by one or more different compute nodes of the plurality of compute nodes.
In Example 11, the subject matter of one of the examples 1 to 10 or any of the Examples described herein may further include, that the access control instruction comprises information related to an access to be granted to the portion of the computer memory, the access to be granted being one of write only access, read only access and read-and-write access.
In Example 12, the subject matter of one of the examples 1 to 11 or any of the Examples described herein may further include, that the plurality of compute nodes comprise at least one of central processing unit-based compute nodes, graphics processing unit-based compute nodes, field-programmable gate array-based compute nodes, and compute nodes that are based on a central processing unit and comprise one or more graphics processing units and/or one or more field-programmable gate arrays.
In Example 13, the subject matter of one of the examples 1 to 12 or any of the Examples described herein may further include, that each process identifier relates to one of a process executed by a central processing unit of a compute node, a process executed by a graphics processing unit of a compute node, and a process executed by a field-programmable gate array of a compute node.
In Example 14, the subject matter of one of the examples 1 to 13 or any of the Examples described herein may further include, that the portion of the computer memory is associated with a process or thread being executed by a compute node of the plurality of compute nodes, wherein the access control instruction is obtained from said compute node.
In Example 15, the subject matter of one of the examples 1 to 14 or any of the Examples described herein may further include, that the access control instruction is obtained from a management apparatus of the computer system.
In Example 16, the subject matter of one of the examples 1 to 15 or any of the Examples described herein may further include, that the control circuitry is configured to revoke the access to the portion of the computer memory for the one or more processes based on a further access control instruction, the further access control instruction indicating that the access to a portion of the computer memory of the memory pool is to be revoked for the one or more processes.
In Example 17, the subject matter of example 16 or any of the Examples described herein may further include, that the access control instruction indicates that access to a portion of the computer memory of the memory pool is to be granted to one or more threads of the one or more processes, the further access control instruction indicating that the access to a portion of the computer memory of the memory pool is to be revoked for the one or more threads of the one or more processes.
Example 18 relates to a management apparatus for managing a computer system, the computer system comprising a plurality of compute nodes and a memory pool, the memory pool comprising computer memory that is accessible to the plurality of compute nodes via a memory controller of the memory pool. The management apparatus comprises interface circuitry for communicating with the plurality of compute nodes and with the memory controller of the memory pool. The management apparatus comprises control circuitry configured to obtain a request for providing an access control instruction from a process being executed by a compute node of the plurality of compute nodes via the interface circuitry. The request indicates that access to a portion of the computer memory of the memory pool that is allocated to the process is to be granted to one or more processes being executed by the plurality of compute nodes of the computer system. The control circuitry is configured to provide the access control instruction to the memory controller of the memory pool via the interface circuitry.
In Example 19, the subject matter of example 18 or any of the Examples described herein may further include, that the request indicates that access to a portion of the computer memory of the memory pool is to be granted to one or more threads of the one or more processes.
Example 20 relates to an apparatus for a compute node of a computer system, the computer system comprising a plurality of compute nodes and a memory pool, the memory pool comprising computer memory that is accessible to the plurality of compute nodes via a memory controller of the memory pool, the apparatus comprising interface circuitry for communicating with the memory pool. The apparatus comprises control circuitry configured to provide an access control instruction of a process being executed by the compute node to the memory controller of the memory pool via the interface circuitry. The access control instruction indicates that access to a portion of the computer memory of the memory pool that is allocated to the process is to be granted to one or more processes being executed by the plurality of compute nodes of the computer system. The access control instruction comprise information related to a node identifier and a process identifier for each of the one or more processes.
In Example 21, the subject matter of example 20 or any of the Examples described herein may further include, that the access control instruction indicates that access to a portion of the computer memory of the memory pool is to be granted to one or more threads of the one or more processes, the access control instruction further comprising information related to a thread identifier for each of the one or more threads.
In Example 22, the subject matter of one of the examples 20 to 21 or any of the Examples described herein may further include, that the access control instruction is provided as a request for providing the access control instruction to a management apparatus for managing the computer system, to cause the management apparatus to provide the access control instruction to the memory controller of the memory pool.
In Example 23, the subject matter of one of the examples 20 to 22 or any of the Examples described herein may further include, that the control circuitry is configured to provide a further access control instruction to the memory controller, the further access control instruction indicating that the access to a portion of the computer memory of the memory pool is to be revoked for the one or more processes.
In Example 24, the subject matter of example 23 or any of the Examples described herein may further include, that the access control instruction indicates that access to a portion of the computer memory of the memory pool is to be granted to one or more threads of the one or more processes, the further access control instruction indicating that the access to a portion of the computer memory of the memory pool is to be revoked for the one or more threads of the one or more processes.
Example 25 relates to a memory pool comprising a memory controller according to one of the examples 1 to 17, the memory pool comprising computer memory that is accessible to a plurality of compute nodes of a computer system via the memory controller.
Example 26 relates to a computer system comprising the memory pool according to example 25 and a plurality of compute nodes.
In Example 27, the subject matter of Example 26 or any of the Examples described herein may further include, that the plurality of compute nodes each comprise an apparatus according to one of the examples 20 to 24.
In Example 28, the subject matter of Example 27 or any of the Examples described herein may further include the management apparatus according to one of the examples 18 or 19.
Example 29 relates to a memory controller device for a memory pool of a computer system, the memory pool comprising computer memory that is accessible to a plurality of compute nodes of the computer system via the memory controller device. The memory controller device comprises communication means for communicating with the plurality of compute nodes. The memory controller device comprises means for controlling being configured for obtaining an access control instruction via the communication means. The access control instruction indicates that access to a portion of the computer memory of the memory pool is to be granted to one or more processes being executed by the plurality of compute nodes of the computer system. The access control instruction comprises information related to a node identifier and a process identifier for each of the one or more processes. The means for controlling is configured for providing access to the portion of the computer memory of the memory pool to the one or more processes based on the access control instruction.
In Example 30, the subject matter of example 29 or any of the Examples described herein may further include, that the means for controlling is configured for obtaining a memory transaction related to the portion of the computer memory, the memory transaction originating from a process being executed by a compute node of the plurality of compute nodes, and to execute or decline the memory transaction based on the access control instruction.
In Example 31, the subject matter of example 30 or any of the Examples described herein may further include, that the means for controlling is configured for executing the memory transaction if the one or more processes comprise the process that the memory transaction originates from.
In Example 32, the subject matter of example 30 or any of the Examples described herein may further include, that the access control instruction comprises information related to an access to be granted to the portion of the computer memory, wherein the means for controlling is configured for executing the memory transaction if the one or more processes comprise the process that the memory transaction originates from and if the memory transaction matches the access to be granted.
In Example 33, the subject matter of one of the examples 30 to 32 or any of the Examples described herein may further include, that the means for controlling is configured for providing a control instruction indicating an access error to the compute node the memory transaction originates from if the memory transaction is declined.
In Example 34, the subject matter of one of the examples 29 to 33 or any of the Examples described herein may further include, that the access control instruction indicates that access to a portion of the computer memory of the memory pool is to be granted to one or more threads of the one or more processes, the access control instruction further comprising information related to a thread identifier for each of the one or more threads.
In Example 35, the subject matter of example 34 or any of the Examples described herein may further include, that the means for controlling is configured for obtaining a memory transaction related to the portion of the computer memory, the memory transaction originating from a thread being executed by a compute node of the plurality of compute nodes, and to execute or decline the memory transaction based on the access control instruction.
In Example 36, the subject matter of example 35 or any of the Examples described herein may further include, that the means for controlling is configured for executing the memory transaction if the one or more threads of the one or more processes comprise the thread that the memory transaction originates from.
In Example 37, the subject matter of example 35 or any of the Examples described herein may further include, that the access control instruction comprises information related to an access to be granted to the portion of the computer memory, wherein the means for controlling is configured for executing the memory transaction if the one or more threads of the one or more processes comprise the thread that the memory transaction originates from and if the memory transaction matches the access to be granted.
In Example 38, the subject matter of one of the examples 29 to 37 or any of the Examples described herein may further include, that the portion of the computer memory is associated with a process or thread being executed by a compute node of the plurality of compute nodes, wherein the one or more processes are executed by the same compute node or by one or more different compute nodes of the plurality of compute nodes.
In Example 39, the subject matter of one of the examples 29 to 38 or any of the Examples described herein may further include, that the access control instruction comprises information related to an access to be granted to the portion of the computer memory, the access to be granted being one of write only access, read only access and read-and-write access.
In Example 40, the subject matter of one of the examples 29 to 39 or any of the Examples described herein may further include, that the plurality of compute nodes comprise at least one of central processing unit-based compute nodes, graphics processing unit-based compute nodes, field-programmable gate array-based compute nodes, and compute nodes that are based on a central processing unit and comprise one or more graphics processing units and/or one or more field-programmable gate arrays.
In Example 41, the subject matter of one of the examples 29 to 40 or any of the Examples described herein may further include, that each process identifier relates to one of a process executed by a central processing unit of a compute node, a process executed by a graphics processing unit of a compute node, and a process executed by a field-programmable gate array of a compute node.
In Example 42, the subject matter of one of the examples 29 to 41 or any of the Examples described herein may further include, that the portion of the computer memory is associated with a process or thread being executed by a compute node of the plurality of compute nodes, wherein the access control instruction is obtained from said compute node.
In Example 43, the subject matter of one of the examples 29 to 42 or any of the Examples described herein may further include, that the access control instruction is obtained from a management device of the computer system.
In Example 44, the subject matter of one of the examples 29 to 43 or any of the Examples described herein may further include, that the means for controlling is configured for revoking the access to the portion of the computer memory for the one or more processes based on a further access control instruction, the further access control instruction indicating that the access to a portion of the computer memory of the memory pool is to be revoked for the one or more processes.
In Example 45, the subject matter of example 44 or any of the Examples described herein may further include, that the access control instruction indicates that access to a portion of the computer memory of the memory pool is to be granted to one or more threads of the one or more processes, the further access control instruction indicating that the access to a portion of the computer memory of the memory pool is to be revoked for the one or more threads of the one or more processes.
Example 46 relates to a management device for managing a computer system, the computer system comprising a plurality of compute nodes and a memory pool, the memory pool comprising computer memory that is accessible to the plurality of compute nodes via a memory controller device of the memory pool, the management device comprising communication means for communicating with the plurality of compute nodes and with the memory controller device of the memory pool. The management device comprises means for controlling configured for obtaining a request for providing an access control instruction from a process being executed by a compute node of the plurality of compute nodes via the communication means, the request indicating that access to a portion of the computer memory of the memory pool that is allocated to the process is to be granted to one or more processes being executed by the plurality of compute nodes of the computer system, and providing the access control instruction to the memory controller device of the memory pool via the communication means.
In Example 47, the subject matter of example 46 or any of the Examples described herein may further include, that the request indicates that access to a portion of the computer memory of the memory pool is to be granted to one or more threads of the one or more processes.
Example 48 relates to a device for a compute node of a computer system, the computer system comprising a plurality of compute nodes and a memory pool, the memory pool comprising computer memory that is accessible to the plurality of compute nodes via a memory controller device of the memory pool. The device comprises communication means for communicating with the memory pool. The device comprises means for controlling configured for providing an access control instruction of a process being executed by the compute node to the memory controller device of the memory pool via the communication means. The access control instruction indicates that access to a portion of the computer memory of the memory pool that is allocated to the process is to be granted to one or more processes being executed by the plurality of compute nodes of the computer system. The access control instruction comprises information related to a node identifier and a process identifier for each of the one or more processes.
In Example 49, the subject matter of example 48 or any of the Examples described herein may further include, that the access control instruction indicates that access to a portion of the computer memory of the memory pool is to be granted to one or more threads of the one or more processes, the access control instruction further comprising information related to a thread identifier for each of the one or more threads.
In Example 50, the subject matter of one of the examples 48 to 49 or any of the Examples described herein may further include, that the access control instruction is provided as a request for providing the access control instruction to a management device for managing the computer system, to cause the management device for providing the access control instruction to the memory controller of the memory pool.
In Example 51, the subject matter of one of the examples 48 to 50 or any of the Examples described herein may further include, that the means for controlling is configured for providing a further access control instruction to the memory controller, the further access control instruction indicating that the access to a portion of the computer memory of the memory pool is to be revoked for the one or more processes.
In Example 52, the subject matter of example 51 or any of the Examples described herein may further include, that the access control instruction indicates that access to a portion of the computer memory of the memory pool is to be granted to one or more threads of the one or more processes, the further access control instruction indicating that the access to a portion of the computer memory of the memory pool is to be revoked for the one or more threads of the one or more processes.
Example 53 relates to a memory pool comprising a memory controller device according to one of the examples 29 to 45, the memory pool comprising computer memory that is accessible to a plurality of compute nodes of a computer system via the memory controller device.
Example 54 relates to a computer system comprising the memory pool according to example 53 and a plurality of compute nodes.
In Example 55, the subject matter of Example 54 or any of the Examples described herein may further include, that the plurality of compute nodes each comprise a device according to one of the examples 48 to 52.
In Example 56, the subject matter of Example 55 or any of the Examples described herein may further include the management device according to one of the examples 46 or 47.
Example 57 relates to a memory controller method for a memory controller of a memory pool of a computer system, the memory pool comprising computer memory that is accessible to a plurality of compute nodes of the computer system via the memory controller method. The memory controller method comprises obtaining an access control instruction, the access control instruction indicating that access to a portion of the computer memory of the memory pool is to be granted to one or more processes being executed by the plurality of compute nodes of the computer system. The access control instruction comprises information related to a node identifier and a process identifier for each of the one or more processes. The memory controller method comprises providing access to the portion of the computer memory of the memory pool to the one or more processes based on the access control instruction.
In Example 58, the subject matter of example 57 or any of the Examples described herein may further include, that the memory controller method comprises obtaining a memory transaction related to the portion of the computer memory, the memory transaction originating from a process being executed by a compute node of the plurality of compute nodes, and to execute or decline the memory transaction based on the access control instruction.
In Example 59, the subject matter of example 58 or any of the Examples described herein may further include, that the memory controller method comprises executing the memory transaction if the one or more processes comprise the process that the memory transaction originates from.
In Example 60, the subject matter of example 58 or any of the Examples described herein may further include, that the access control instruction comprises information related to an access to be granted to the portion of the computer memory, the memory controller method comprising executing the memory transaction if the one or more processes comprise the process that the memory transaction originates from and if the memory transaction matches the access to be granted.
In Example 61, the subject matter of one of the examples 54 to 56 or any of the Examples described herein may further include, that the memory controller method comprises providing a control instruction indicating an access error to the compute node the memory transaction originates from if the memory transaction is declined.
In Example 62, the subject matter of one of the examples 57 to 61 or any of the Examples described herein may further include, that the access control instruction indicates that access to a portion of the computer memory of the memory pool is to be granted to one or more threads of the one or more processes, the access control instruction further comprising information related to a thread identifier for each of the one or more threads.
In Example 63, the subject matter of example 62 or any of the Examples described herein may further include, that the memory controller method comprises obtaining a memory transaction related to the portion of the computer memory, the memory transaction originating from a thread being executed by a compute node of the plurality of compute nodes, and to execute or decline the memory transaction based on the access control instruction.
In Example 64, the subject matter of example 63 or any of the Examples described herein may further include, that the memory controller method comprises executing the memory transaction if the one or more threads of the one or more processes comprise the thread that the memory transaction originates from.
In Example 65, the subject matter of example 63 or any of the Examples described herein may further include, that the access control instruction comprises information related to an access to be granted to the portion of the computer memory, the memory controller method comprising executing the memory transaction if the one or more threads of the one or more processes comprise the thread that the memory transaction originates from and if the memory transaction matches the access to be granted.
In Example 66, the subject matter of one of the examples 57 to 65 or any of the Examples described herein may further include, that the portion of the computer memory is associated with a process or thread being executed by a compute node of the plurality of compute nodes, wherein the one or more processes are executed by the same compute node or by one or more different compute nodes of the plurality of compute nodes.
In Example 67, the subject matter of one of the examples 57 to 66 or any of the Examples described herein may further include, that the access control instruction comprises information related to an access to be granted to the portion of the computer memory, the access to be granted being one of write only access, read only access and read-and-write access.
In Example 68, the subject matter of one of the examples 57 to 67 or any of the Examples described herein may further include, that the plurality of compute nodes comprise at least one of central processing unit-based compute nodes, graphics processing unit-based compute nodes, field-programmable gate array-based compute nodes, and compute nodes that are based on a central processing unit and comprise one or more graphics processing units and/or one or more field-programmable gate arrays.
In Example 69, the subject matter of one of the examples 57 to 68 or any of the Examples described herein may further include, that each process identifier relates to one of a process executed by a central processing unit of a compute node, a process executed by a graphics processing unit of a compute node, and a process executed by a field-programmable gate array of a compute node.
In Example 70, the subject matter of one of the examples 57 to 69 or any of the Examples described herein may further include, that the portion of the computer memory is associated with a process or thread being executed by a compute node of the plurality of compute nodes, wherein the access control instruction is obtained from said compute node.
In Example 71, the subject matter of one of the examples 57 to 70 or any of the Examples described herein may further include, that the access control instruction is obtained from a management device of the computer system.
In Example 72, the subject matter of one of the examples 57 to 71 or any of the Examples described herein may further include, that the memory controller method comprises revoking the access to the portion of the computer memory for the one or more processes based on a further access control instruction, the further access control instruction indicating that the access to a portion of the computer memory of the memory pool is to be revoked for the one or more processes.
In Example 73, the subject matter of example 72 or any of the Examples described herein may further include, that the access control instruction indicates that access to a portion of the computer memory of the memory pool is to be granted to one or more threads of the one or more processes, the further access control instruction indicating that the access to a portion of the computer memory of the memory pool is to be revoked for the one or more threads of the one or more processes.
Example 74 relates to a management method for managing a computer system, the computer system comprising a plurality of compute nodes and a memory pool, the memory pool comprising computer memory that is accessible to the plurality of compute nodes via a memory controller of the memory pool. The management method comprises obtaining a request for providing an access control instruction from a process being executed by a compute node of the plurality of compute nodes. The request indicates that access to a portion of the computer memory of the memory pool that is allocated to the process is to be granted to one or more processes being executed by the plurality of compute nodes of the computer system. The management method comprises providing the access control instruction to the memory controller of the memory pool.
In Example 75, the subject matter of example 74 or any of the Examples described herein may further include, that the request indicates that access to a portion of the computer memory of the memory pool is to be granted to one or more threads of the one or more processes.
Example 76 relates to a method for a compute node of a computer system, the computer system comprising a plurality of compute nodes and a memory pool, the memory pool comprising computer memory that is accessible to the plurality of compute nodes via a memory controller of the memory pool. The method comprises providing an access control instruction of a process being executed by the compute node to the memory controller of the memory pool via the communication means. The access control instruction indicates that access to a portion of the computer memory of the memory pool that is allocated to the process is to be granted to one or more processes being executed by the plurality of compute nodes of the computer system. The access control instruction comprises information related to a node identifier and a process identifier for each of the one or more processes.
In Example 77, the subject matter of example 76 or any of the Examples described herein may further include, that the access control instruction indicates that access to a portion of the computer memory of the memory pool is to be granted to one or more threads of the one or more processes, the access control instruction further comprising information related to a thread identifier for each of the one or more threads.
In Example 78, the subject matter of one of the examples 76 to 77 or any of the Examples described herein may further include, that the access control instruction is provided as a request for providing the access control instruction to a management device for managing the computer system, to cause the management device for providing the access control instruction to the memory controller of the memory pool.
In Example 79, the subject matter of one of the examples 76 to 78 or any of the Examples described herein may further include, that the method comprises providing a further access control instruction to the memory controller, the further access control instruction indicating that the access to a portion of the computer memory of the memory pool is to be revoked for the one or more processes.
In Example 80, the subject matter of example 79 or any of the Examples described herein may further include, that the access control instruction indicates that access to a portion of the computer memory of the memory pool is to be granted to one or more threads of the one or more processes, the further access control instruction indicating that the access to a portion of the computer memory of the memory pool is to be revoked for the one or more threads of the one or more processes.
Example 81 relates to a memory controller for a memory pool, the memory controller being configured to execute the method according to one of the examples 57 to 73, the memory pool comprising computer memory that is accessible to a plurality of compute nodes of a computer system via the memory controller.
Example 82 relates to a compute node being configured to execute the method according to one of the examples 76 to 80 or any of the Examples described herein.
Example 83 relates to a management device 30 being configured to execute the method according to one of the examples 74 or 75 or any of the Examples described herein.
Example 84 relates to a machine readable storage medium including program code, when executed, to cause a machine to perform the method of one of the examples 57 to 73, the method of one of the examples 76 to 80, or the method of one of the examples 74 or 75 or any of the Examples described herein.
Example 85 relates to a computer program having a program code for performing the method of one of the examples 57 to 73, the method of one of the examples 76 to 80, or the method of one of the examples 74 or 75 or any of the Examples described herein, when the computer program is executed on a computer, a processor, or a programmable hardware component.
Example 86 relates to a machine readable storage including machine readable instructions, when executed, to implement a method or realize an apparatus as described in any example.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A memory controller device (10) for a memory pool (100) of a computer system (1000), the memory pool (100) comprising computer memory (16) that is accessible to a plurality of compute nodes (200) of the computer system (1000) via the memory controller device (10), the device comprising:
communication means (12) for communicating with the plurality of compute nodes (200); and
means for controlling (14) being configured for:
obtaining an access control instruction via the communication means (12),
the access control instruction indicating that access to a portion of the computer memory (16) of the memory pool (100) is to be granted to one or more processes being executed by the plurality of compute nodes (200) of the computer system (1000),
the access control instruction comprising information related to a node identifier and a process identifier for each of the one or more processes, and for providing access to the portion of the computer memory (16) of the memory pool to the one or more processes based on the access control instruction.

2. The memory controller device (10) according to claim 1, wherein the means for controlling (14) is configured for obtaining a memory transaction related to the portion of the computer memory (16), the memory transaction originating from a process being executed by a compute node of the plurality of compute nodes (200), and for executing or declining the memory transaction based on the access control instruction.

3. The memory controller device (10) according to claim 2, wherein the means for controlling (14) is configured for executing the memory transaction if the one or more processes comprise the process that the memory transaction originates from.

4. The memory controller device (10) according to claim 2, wherein the access control instruction comprises information related to an access to be granted to the portion of the computer memory (16), wherein the means for controlling (14) is configured for executing the memory transaction if the one or more processes comprise the process that the memory transaction originates from and if the memory transaction matches the access to be granted.

5. The memory controller device (10) according to one of the claims 2 to 4, wherein the means for controlling (14) is configured for providing a control instruction indicating an access error to the compute node the memory transaction originates from if the memory transaction is declined.

6. The memory controller device (10) according to one of the claims 1 to 5, wherein the access control instruction indicates that access to a portion of the computer memory (16) of the memory pool (100) is to be granted to one or more threads of the one or more processes, the access control instruction further comprising information related to a thread identifier for each of the one or more threads.

7. The memory controller device (10) according to claim 6, wherein the means for controlling (14) is configured for obtaining a memory transaction related to the portion of the computer memory (16), the memory transaction originating from a thread being executed by a compute node of the plurality of compute nodes (200), and executing or declining the memory transaction based on the access control instruction.

8. The memory controller device (10) according to claim 7, wherein the means for controlling (14) is configured for executing the memory transaction if the one or more threads of the one or more processes comprise the thread that the memory transaction originates from.

9. The memory controller device (10) according to claim 7, wherein the access control instruction comprises information related to an access to be granted to the portion of the computer memory (16), wherein the means for controlling (14) is configured for executing the memory transaction if the one or more threads of the one or more processes comprise the thread that the memory transaction originates from and if the memory transaction matches the access to be granted.

10. The memory controller device (10) according to one of the claims 1 to 9, wherein the access control instruction comprises information related to an access to be granted to the portion of the computer memory (16), the access to be granted being one of write only access, read only access and read-and-write access.

11. A management device (30) for managing a computer system (1000), the computer system (1000) comprising a plurality of compute nodes (200) and a memory pool (100), the memory pool (100) comprising computer memory (16) that is accessible to the plurality of compute nodes (200) via a memory controller device (10) of the memory pool (100), the management device comprising:
communication means (32) for communicating with the plurality of compute nodes (200) and with the memory controller device (10) of the memory pool (100); and
means for controlling (34) configured for:
obtaining a request for providing an access control instruction from a process being executed by a compute node of the plurality of compute nodes (200) via the communication means (32), the request indicating that access to a portion of the computer memory (16) of the memory pool (100) that is allocated to the process is to be granted to one or more processes being executed by the plurality of compute nodes (200) of the computer system (1000), and
providing the access control instruction to the memory controller device (10) of the memory pool (100) via the communication means (32).

12. The management device according to claim 11, wherein the request indicates that access to a portion of the computer memory (16) of the memory pool (100) is to be granted to one or more threads of the one or more processes.

13. A device (20) for a compute node (200) of a computer system (1000), the computer system (1000) comprising a plurality of compute nodes (200) and a memory pool (100), the memory pool (100) comprising computer memory (16) that is accessible to the plurality of compute nodes (200) via a memory controller device (10) of the memory pool (100), the device comprising:
communication means (22) for communicating with the memory pool (100); and
means for controlling (24) configured for providing an access control instruction of a process being executed by the compute node to the memory controller device (10) of the memory pool (100) via the communication means (22),
the access control instruction indicating that access to a portion of the computer memory (16) of the memory pool (100) that is allocated to the process is to be granted to one or more processes being executed by the plurality of compute nodes (200) of the computer system (1000),
the access control instruction comprising information related to a node identifier and a process identifier for each of the one or more processes.

14. The device (20) according to claim 13, wherein the access control instruction indicates that access to a portion of the computer memory (16) of the memory pool (100) is to be granted to one or more threads of the one or more processes, the access control instruction further comprising information related to a thread identifier for each of the one or more threads.

15. A machine readable storage including machine readable instructions, when executed, to implement a method or realize an apparatus or device as claimed in any pending claim.
